Europäisches Patentamt

European Patent Office

Office européen des brevets

(11) Publication number: **0 309 287**
**A2**

# EUROPEAN PATENT APPLICATION

(21) Application number: **88308890.8**

(22) Date of filing: **26.09.88**

(51) Int. Cl.⁴: **G 11 B 20/10**

(30) Priority: **24.09.87 JP 239813/87**

(43) Date of publication of application:
**29.03.89 Bulletin 89/13**

(84) Designated Contracting States: **DE FR GB**

(71) Applicant: **KABUSHIKI KAISHA TOSHIBA
72, Horikawa-cho Saiwai-ku
Kawasaki-shi Kanagawa-ken 210 (JP)**

(72) Inventor: **Kanbara, Yoshihiko c/o Patent Division
Toshiba Corp. Principal Office 1-1-1, Shibaura
Minato-ku Tokyo (JP)**

**Aoki, Hidehiko c/o Patent Division
Toshiba Corp. Principal Office 1-1-1, Shibaura
Minato-ku Tokyo (JP)**

(74) Representative: **Muir, Ian R. et al
HASELTINE LAKE & CO. Hazlitt House 28 Southampton
Buildings Chancery Lane
London WC2A 1AT (GB)**

A request for correction of Fig. 3 and the description has been filed pursuant to Rule 88 EPC. A decision on the request will be taken during the proceedings before the Examining Division (Guidelines for Examination in the EPO, A-V, 2.2).

(54) **Data reproducing apparatus.**

(57) An apparatus for reproducing data which is digitally recorded on a magnetic tape. The data reproducing apparatus includes a pair of rotary magnetic heads (10a, 10b), each for alternately generating an intermittently reproduced analogous data signal corresponding to the digitally recorded data on the magnetic tape, a rotary head switch (12) for combining the analogous data signals into a single reproduced data signal, a reproduced signal equalizer circuit (16) for equalizing the frequency response characteristics of the single reproduced data signal and outputting an equalized analogous data signal, a pair of level detectors (24a, 24b) alternately activated in synchronism with the rotary magnetic heads (10a, 10b) for detecting the level of the equalized analogous data signal corresponding to each of the intermittently reproduced analogous data signals and variable gain amplifier (20a, 20b, 20) responsive to the level detection signals for automatically adjusting the gain of the intermittently reproduced analogous data signals.

EP 0 309 287 A2

**Description**

## DATA REPRODUCING APPARATUS

The present invention relates generally to a data reproducing apparatus, and more particularly, to a rotary head type digitally recorded data reproducing apparatus.

Recently, high density recording apparatus, such as digital audio tape recorders, video tape recorders or the like, have been developed. In these high density recording apparatus, e.g., the digital audio tape recorders, an audio signal is recorded on a magnetic tape after being converted to digital data by PCM (Pulse Code Modulation) technology.

In the digital audio tape recorders, a stationary head type tape recorder and a rotary head type tape recorder are known. The stationary head type tape recorder comprises many heads arranged in the direction of tape width. The rotary head type tape recorder has a construction similar to home use video tape recorders such as VHS or Beta system video tape recorders. That is, the rotary head type digital tape recorder comprises two rotary heads for alternately scanning a magnetic tape in the helical direction of the tape width. For the helical scanning, a cylindrical drum is provided so that two rotary heads rotate along the perimeter of the cylindrical drum and alternately scan the type wound on the cylindrical drum.

In recent years, the rotary head type digital audio tape recorder has been widely used in these two types of apparatus. Therefore, descriptions will be made of only the rotary head type digital audio tape recorder and the term digital audio tape recorder as used herein will correspond to the rotary head type digital audio tape recorder.

In the digital audio tape recorder, two rotary magnetic heads are arranged at mutually opposing positions around the drum and a magnetic tape which is running at a prescribed low speed is wound around the drum obliquely at a certain tilt in the range at 90° angle from the center of the drum. Digital data recorded on the magnetic tape are reproduced by the rotary heads rotating in the drum at high speed for alternately scanning the magnetic tape while the magnetic tape travels at low speed.

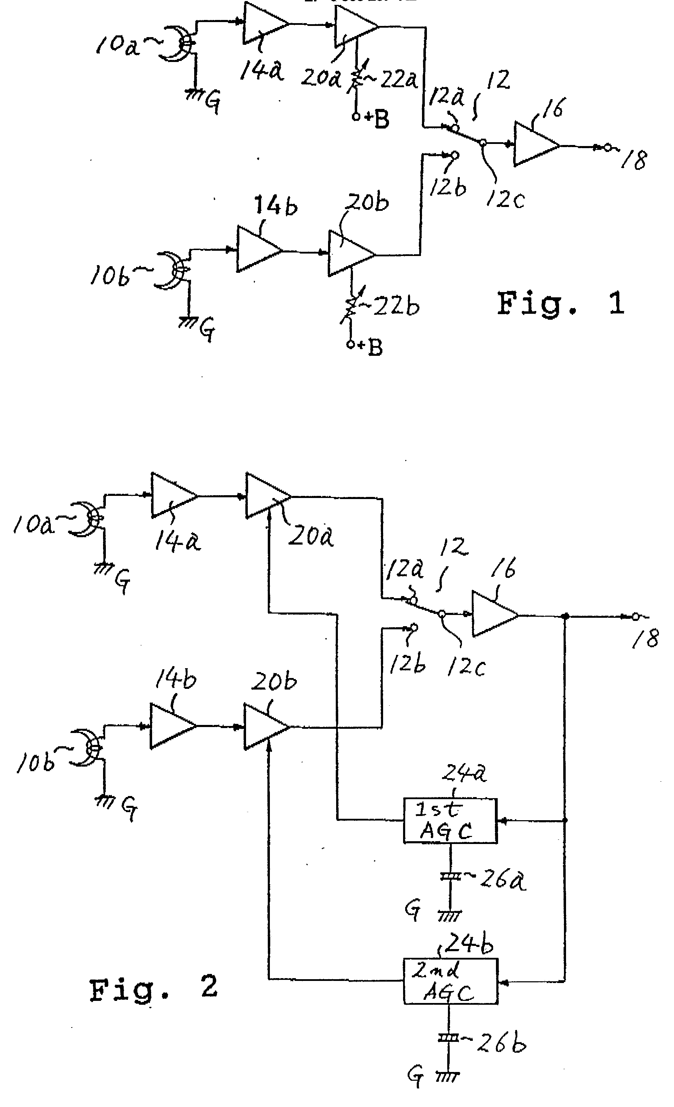

FIGURE 1 shows a block diagram for reproducing data from a magnetic tape used in a digital audio tape recorder previously known to the applicants. In Figure 1, a pair of first and second rotary heads 10a and 10b for helically scanning a magnetic tape (not shown) reproduce data from the magnetic tape. The first and second rotary heads 10a and 10b alternately scan the magnetic tape so that the reproduced data is intermittently output from the first and second rotary heads 10a and 10b.

Here if the recorded data on the magnetic tape have an ideal pulse waveform, waveforms of reproduced data from the first and second rotary heads 10a and 10b usually become blunted or deformed. Thus, the reproduced data from the first and second rotary heads 10a and 10b are obtained in a form similar in appearance to analog high frequency signals, which vary in response to the pulses of the digital data. The analogous reproduced data obtained by the first and second rotary heads 10a and 10b are influenced by reproducing characteristics, especially by gain response characteristics of the first and second rotary heads 10a and 10b. Generally, the first and second rotary heads 10a and 10b have an imbalance therebetween in regard to the gain response characteristics. Thus, the two reproduced data from the heads 10a and 10b both originating from the same recorded digital data generally have different levels from each other.

The reproduced data obtained by the first rotary head 10a is applied to a first stationary terminal 12a of a rotary head switch 12 through a first amplifier 14a. The reproduced data obtained by the rotary head B is applied to a second stationary terminal 12b of the rotary head switch 12 through a second amplifier 14a. The first and second amplifiers 14a and 14b amplify the reproduced data to predetermined levels, respectively. A movable terminal 12c of the rotary head switch 12 is alternately coupled to the first and second stationary terminals 12a and 12b in synchronism with a prescribed control signal.

The control signal is obtained in response to the rotation of the first and second rotary heads 10a and 10b. Thus, both the reproduced data applied to the first and second stationary terminals 12a and 12b are alternately output from the rotary head switch 12. As a result, the two intermittent reproduced data signals obtained by the first and second rotary heads 10a and 10b are combined into a single continuous reproduced data signal.

The single continuous reproduced data signal is applied from the rotary head switch 12 to a reproducing equalizer circuit 16. The reproducing equalizer circuit 16, for example, gives prescribed frequency/gain response characteristics to the continuous analogous reproduced data signal to compensate for the frequency characteristics of the reproduced data signal. Then the equalized analogous reproduced data signals are output to an output terminal 18. The reproduced data signal obtained from the output terminal 18 is applied to a pulse waveform shaping circuit (not shown) for restoring the digital data to a form like that recorded on the tape.

If the two different reproduced data signals are combined into the single continuous reproduced data signal by the rotary head switch 12 as they are, the level of the single continuous reproduced data signal varies in response to the two different reproduced data signals before the rotary head switch 12. Thus the corresponding digital data signal restored in the pulse waveform shaping circuit varies in response to the two different reproduced data signals.

To compensate for the imbalance between the gain response characteristics of the first and second rotary heads 10a and 10b, a pair of first and second gain adjusting circuits 20a and 20b are provided in the respective circuits before the rotary head switch 12. The first and second gain adjusting circuits 20a and 20b are provided with variable resistors 22a and 22b coupled between them and a prescribed potential source +B.

The gain response characteristics of the first and second rotary heads 10a and 10b generally are different from each other, as described above. Thus, the levels of the reproduced data signal which are output from the first and second rotary heads 10a and 10b are different from each other. However, the difference or imbalance between the levels is compensated to make both reproduced data signal equal by manually adjusting the variable resistors 22a and 22b provided with the first and second gain adjusting circuits 20a and 20b. Thus the imbalance between the reproducing characteristics of the first and second rotary heads 10a and 10b is eliminated.

However, in this kind of data reproducing apparatus, e.g., the prior digital audio tape recorders known to the applicant, it is necessary manually to adjust the variable resistors 22a and 22b for each data reproducing apparatus. The manual adjustment must be carried out with a lot of care. Further the adjustment must be carried out again if the rotary heads are replaced by new ones during repair services.

As described above, such data reproducing apparatus have a problem in that the level difference between data signals reproduced by multiple heads must be manually adjusted for every apparatus to compensate for differences between reproducing characteristics of the multiple heads. Further the manual adjustment of the reproduced data signal is complicated and it is not easy to carry out the adjustment.

The present invention seeks to provide a data reproducing apparatus which is able automatically to compensate for differences between reproducing characteristics of multiple heads.

An apparatus for reproducing data recorded on a recording medium according to one aspect of the present invention comprises a plurality of head means each provided for generating an intermittently reproduced analogous data signal from the recording medium in a prescribed order from the data on the recording medium, means for combining a plurality of the analogous data signals intermittently obtained by the plurality of head means into a single reproduced data signal and means for processing the single reproduced data signal from the combining means and outputting a processed analogous data signal, characterised in that the apparatus further comprises means for detecting the level of the processed analogous data signal and generating a level detection signal corresponding to each of the intermittently reproduced analogous data signals and means responsive to the level detection signals for automatically adjusting the gain of the intermittently reproduced analogous data signals.

An apparatus for reproducing data which is digitally recorded on a magnetic tape according to a second aspect of the present invention includes a pair of rotary magnetic heads, each for alternately generating an intermittently reproduced analogous data signal corresponding to the digitally recorded data on the magnetic tape, a rotary head switch for combining the analogous data signals into a single reproduced data signal, a reproduced signal equalizer circuit for equalizing the frequency response characteristics of the single reproduced data signal and outputting an equalized analogous data signal, a pair of level detectors alternately activated in synchronism with the rotary magnetic heads for detecting the level of the equalized analogous data signal corresponding to each of the intermittently reproduced analogous data signals and variable gain amplifier means responsive to the level detection signals for automatically adjusting the gain of the intermittently reproduced analogous data signals.

For a better understanding of the present invention reference will now be made, by way of example, to the accompanying drawings, in which:

Figure 1 is a block diagram showing a reproducing apparatus known to the applicant;

Figure 2 is a block diagram showing a first embodiment of a data reproducing apparatus according to the present invention;

Figure 3 is a circuit diagram showing a practical example of the data reproducing apparatus in Figure 2; and

Figure 4 is a block diagram showing a second embodiment of a data reproducing apparatus according to the present invention.

The present invention will be described in detail with reference to Figures 2, 3 and 4. Throughout the drawings, reference numerals or letters used in Figure 1 will be used to designate like or equivalent elements for simplicity of explanation.

Referring now to Figure 2, a first embodiment of the data reproducing apparatus according to the present invention will be described. In Figure 2, a pair of first and second rotary heads 10a and 10b are provided for helically scanning a magnetic tape (not shown) to reproduce respectively data signals from the magnetic tape. The first and second rotary heads 10a and 10b alternately scan the magnetic tape so that each of the reproduced data signals is intermittently output from the first and second rotary heads 10a and 10b. The reproduced data signal outputs from the first and second rotary heads 10a and 10b are obtained in a form similar in appearance to analog high frequency signals which vary in response to the pulses of the digital data signal, as described before.

The analogous reproduced data signal obtained by the first rotary head 10a is applied to a first stationary terminal 12a of a rotary head switch 12 through a first amplifier 14a. The analogous reproduced data signal obtained by the second rotary head 10b is applied to a second stationary terminal 12b of the rotary head switch 12 through a second amplifier 14b. The first and second amplifiers 14a and 14b amplify the reproduced data signals to predetermined levels, respectively. A movable terminal 12c of the rotary head switch 12 is alternately coupled to the first and second stationary terminals 12a and 12b in synchronism with a prescribed control signal.

The control signal is obtained in response to the rotation of the first and second rotary heads 10a and 10b. Thus, both the analogous reproduced data signals applied to the first and second stationary terminals 12a and 12b are alternately output from the rotary head switch 12. As a result, the two intermittent analogous reproduced data signals obtained by the first and second rotary heads 10a and 10b are combined into a single continuous reproduced data signal.

The single continuous reproduced data signal is applied from the rotary head switch 12 to a reproducing equalizer circuit 16. The reproducing equalizer circuit 16, for example, gives prescribed frequency/gain response characteristics to the continuous analogous reproduced data signal to compensate for the frequency characteristics of the reproduced data signal. Then the equalized analogous reproduced data signals are output to an output terminal 18. The reproduced data signals obtained from the output terminal 18 are applied to a pulse waveform shaping circuit (not shown) for the restoring the digital data signal recorded on the tape.

Here the first and second rotary heads 10a and 10b are assumed to have different gain response characteristics. Thus, the reproduced data signals from the first and second rotary heads 10a and 10b are different in level from each other. However, the reproduced data signals are applied to the rotary head switch 12 through first and second gain adjusting circuits 20a and 20b, respectively. The first and second gain adjusting circuits 20a and 20b are provided with control terminals coupled to the output terminal of the reproducing equalizer circuit 16 through first and second automatic gain control signal generating circuits (referred as AGC circuits hereafter) 24a and 24b. The first and second AGC circuits 24a and 24b are provided with first and second capacitors 26a and 26b coupled between them and a prescribed reference potential source G.

The first and second AGC circuits 24a and 24b are alternately activated in synchronism with the rotary head switch 12. In the state where the movable terminal 12c of the rotary head switch 12 is connected to the first stationary 12a so that the equalized reproduced data signal associated with the first rotary head 10a is output from the reproducing equalizer circuit 16, the first AGC circuit 24a is activated to the operating state and the second AGC circuit 24b is deactivated to the non-operating state. In the state where the movable terminal 12c of the rotary head switch 12 is connected to the second stationary terminal 12b so that the equalized reproduced data signal associated with the second rotary head 10b is output from the reproducing equalizer circuit 16, the second AGC circuit 24b is activated to the operating state and the first AGC circuit 24a is deactivated to the non-operating state.

The first AGC circuit 24a in the operating state detects the level of the equalized reproduced data signal associated with the first rotary head 10a and applies the detected gain control signal to the first gain adjusting circuit 20a. The first gain adjusting circuit 20a automatically adjusts the level of the reproduced data signal applied from the first rotary head 10a so that the reproduced data signal is adjusted to a prescribed level.

The second AGC circuit 24b in the operating state detects the level of the equalized reproduced data signal associated with the second rotary head 10b and applies the detected gain control signal to the second gain adjusting circuit 20b. The second gain adjusting circuit 20b automatically adjusts the level of the reproduced data signal applied from the second rotary head 10b so that the reproduced data signal is adjusted to the prescribed level.

Therefore, according to the first embodiment of the data reproducing apparatus of the present invention, both reproduced data signals obtained by the first and second rotary heads 10a and 10b are automatically adjusted to the prescribed level in the first and second gain adjusting circuits controlled by the first and second AGC circuits 24a and 24b. Therefore, the difference between the reproducing characteristics of the first and second rotary heads 10a and 10b can be automatically compensated without manual adjustment. Further the automatic adjustment is continuously carried out so that the data reproducing apparatus can provide reproduced data signals with a good level conformity therebetween.

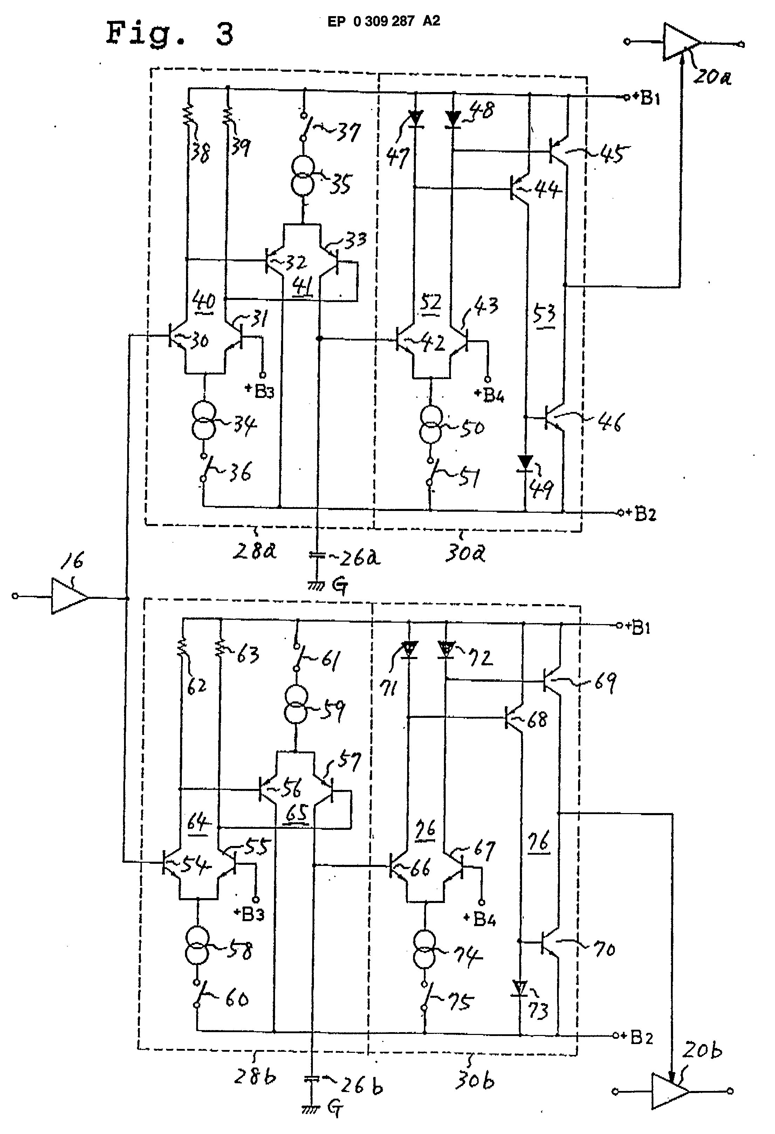

Referring now to FIGURE 3, a practical example of the data reproducing apparatus of FIGURE 2 will be described. FIGURE 3 shows the details of the first and second AGC circuits 24a and 24b. In FIGURE 3, the first AGC circuit 24a comprises a first rectifying circuit 28a and a first voltage to current converting circuit 30a. The first rectifying circuit 28a has four transistors 30 to 33, a pair of first and second constant current sources 34 and 35, a pair of first and second switches 36 and 37 and a pair of resistors 38 and 39.

The transistors 30 and 31 are coupled to each other to form a first differential circuit 40. The collectors of the transistors 30 and 31 are coupled to a first potential source +B1 through the resistors 38 and 39. The emitters of the transistors 30 and 31 are coupled to a second potential source +B2 through the first constant current source 34 and the first switch 36 . The base of the transistor 30 is coupled to the output terminal of the reproducing equalizer circuit 16. The base of the transistor 31 is coupled to a third potential source +B3. The transistors 32 and 33 are coupled to each other to form a second differential circuit 41. The bases of the transistors 32, 33 of the second differential circuit 41 are coupled respectively to the collectors of the transistors 30, 31 of the first differential circuit 40. The emitters of the transistors 32 and 33 are coupled to the first potential source +B1 through the second constant current source 35 and the second switch 37 . The collector of the transistor 32 is coupled to the second potential source +B2. The collector of the transistor 33 is coupled to the reference potential source G through the first capacitor 26a for charging a rectified current corresponding to the equalized reproduced data signal from the reproducing equalizer circuit 16 (see FIGURE 2).

The first voltage to current converting circuit 30a comprises five transistors 42 to 46, three diodes 47, 48 and 49, a third constant current source 50 and a third switch 51. The transistors 42 and 43 are coupled to each other to form a third differential circuit 52. The collectors of the transistors 42 and 43 are coupled to the first potential source +B1 through the diodes 47 and 48. The emitters of the transistors 42 and 43 are coupled to the second potential source +B2 through the third constant current source 50 and the third switch 51 in series. The base of the transistor 42 is coupled to the collector of the transistor 33 in the first rectifying circuit 28a. The base of the transistor 43 is coupled to a fourth potential source +B4.

The transistors 44, 45, 46 and the diode 49 are coupled to each other to form a first current mirror configuration current output circuit 53. The transistor 44 and the diode 49 are coupled in series between the first and second potential sources +B1 and +B2. The transistors 45 and 46 are also coupled in series between the first and second potential sources +B1 and +B2. The bases of the transistors 44 and 45 are coupled respectively to the collectors of the transistors 42 and 43 of the third differential circuit 52. The base of the transistor 46 is coupled to the coupling node between the transistor 44 and the diode 49.

The coupling node between the transistors 45 and 46 is coupled to the first gain adjusting circuit 20a (see FIGURE 2) for applying the control signal obtained in the first AGC circuit 24a.

The second AGC circuit 24b in FIGURE 3 comprises a second rectifying circuit 28b and a second voltage to current converting circuit 30b. The second rectifying circuit 28b has four transistors 54 to 57, a pair of fourth and fifth constant current sources 58 and 59, a pair of fourth and fifth switches 60 and 61 and a pair of resistors 62 and 63.

The transistors 54 and 55 are coupled to each other to form a fourth differential circuit 64. The collectors of the transistors 54 and 55 are coupled to the first potential source +B1 through the resistors 62 and 63 respectively. The emitters of the transistors 54 and 55 are coupled to the second potential source +B2 through the fourth constant current source 58 and the fourth switch 60. The base of the transistor 54 is coupled to the output terminal of the reproducing equalizer circuit 16. The base of the transistor 55 is coupled to the third potential source +B3. The transistors 56 and 57 are coupled to each other to form a fifth differential circuit 65. The bases of the transistors 56 and 57 of the fifth differential circuit 65 are coupled respectively to the collectors of the transistors 54 and 55 of the fourth differential circuit 64. The emitters of the transistors 56 and 57 are coupled to the first potential source +B1 through the fifth constant current source 59 and the fifth switch 61. The collector of the transistors 56 is coupled to the second potential source + B2. The collector of the transistors 57 is coupled to the reference potential source G through the second capacitor 26b for charging a rectified current corresponding to the equalized reproduced data signal from the reproducing equalizer circuit 16 (see FIGURE 2).

The second voltage to current converting circuit 30b comprises five transistors 66 to 70, three diodes 71, 72 and 73, a sixth constant current source 74 and a sixth switch 75. The transistors 66 and 67 are coupled to each other to form a sixth differential circuit 76. The collectors of the transistors 66 and 67 are coupled to the first potential source +B1 through the diodes 71 and 72 respectively. The emitters of the transistors 66 and 67 are coupled to the second potential source +B2 through the sixth constant current source 74 and the sixth switch 75 in series. The base of the transistor 66 is coupled to the collector of the transistor 57 in the second rectifying circuit 28b. The base of the transistor 67 is coupled to the fourth potential source +B4.

The transistors 68, 69, 70 and the diode 73 are coupled to each other to form a second current mirror configuration current output circuit 76. The transistor 68 and the diode 73 are coupled in series between the first and second potential sources +B1 and +B2. The transistors 69 and 70 are also coupled in series between the first and second potential sources +B1 and +B2. The bases of the transistors 68 and 69 are coupled respectively to the collectors of the transistors 66 and 67 of the sixth differential circuit 76. The base of the transistor 70 is coupled to the coupling node between the transistor 68 and the diode 73.

The coupling node between the transistors 69 and 70 is coupled to the second gain adjusting circuit 20b (see FIGURE 2) for applying the control signal obtained in the second AGC circuit 24b.

The first to sixth switches 36, 37, 51, 60, 61 and 75 are controlled in synchronism with the rotary head switch 12. In the state where the movable terminal 12c of the rotary head switch 12 is connected to the first stationary terminal 12a so that the equalized reproduced data signal associated with the first rotary head 10a are output from the reproducing equalizer circuit 16, the first, second and third switches 36, 37 and 38 in the first AGC circuit 24a are activated to the operating state and the fourth, fifth and sixth switches 60, 61 and 75 in the second AGC circuit 24b are deactivated to the non-operating state.

The first rectifying circuit 28a generates the control signal by rectifying the equalized reproduced data signal from the reproducing equalizer circuit 16 associated with the reproduced data signal from the first rotary head 10a. The rectified current is controlled to constant level based on third potential +B3 applied to the base of the transistor 31. The rectified current is charged in the first capacitor 26a. The charge potential on the first capacitor 26a is then converted to a control current signal by the first voltage-to-current converting circuit 30a. The control current signal is then applied to the first gain adjusting circuit 20a. Thus, the reproduced data signal from the first rotary head 10a is adjusted to the prescribed level.

In the state where the movable terminal 12c of the rotary head switch 12 is connected to the second stationary terminal 12b so that the equalized reproduced data signal associated with the second rotary head 10b is output from the reproducing equalizer circuit 16, the fourth, fifth and sixth switches 60, 61 and 75 in the second AGC circuit 24b are activated to the operating state and the first, second and third switches 36, 37 and 38 in the first AGC circuit 24a are deactivated to the non-operating state.

The second rectifying circuit 28b generates the control signal by rectifying the equalized reproduced data signal from the reproducing equalizer circuit 16 associated with the reproduced data signal from the second rotary head 10b. The rectified current is controlled to constant level based on third potential +B3 applied to the base of the transistor 55. The rectified current is charged in the second capacitor 26b. The charge potential on the second capacitor 26b is then converted to a control current signal by the second voltage-to-current converting circuit 30b. The control current signal is then applied to the second gain adjusting circuit 20b. Thus, the reproduced data signal from the second rotary head 10b is adjusted to the prescribed level. As a result, the difference between both the reproduced data signal obtained by the first and second rotary heads 10a and 10b, due to the imbalance of the reproducing characteristics thereof.

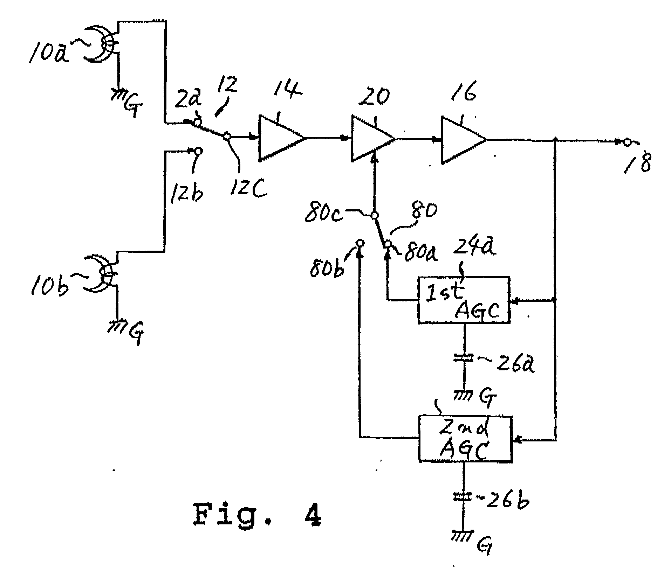

Referring now to FIGURE 4, a second embodiment of the data reproducing apparatus according to the present invention will be described. The second embodiment of the data reproducing apparatus is different from the first embodiment (FIGURE 2) in that the first and second rotary heads 10a and 10b are directly coupled to the first and second stationary terminals 12a and 12b of the rotary head switch 12. Due to this difference, each of the amplifier 14 and the gain adjusting circuit 20 is provided in one piece. The amplifier 14 and the gain adjusting circuit 20 are coupled in series between the movable terminal 12c of the rotary head switch 12 and the reproducing equalizer circuit 16.

Output terminals of the first and second AGC circuit 24a and 24b are coupled to first and second stationary terminals 80a and 80b of a seventh switch 80. A movable terminal 80c of the seventh switch 80 is coupled to the control terminal of the gain adjusting circuit 20. The seventh switch 80 is controlled in synchronism with the rotary head switch 12. In the state where the movable terminal 12c of the rotary head switch 12 is connected to the first stationary terminal 12a so that the equalized reproduced data signals associated with the first rotary head 10a are output from the reproducing equalizer circuit 16, the movable terminal 80c of the seventh switch 80 is connected to the first stationary terminal 80a. Thus, the first AGC circuit 24a is activated to generate the control signal in association with the reproduced data signal from the first rotary head 10a.

In the state where the movable terminal 12c of the rotary head switch 12 is connected to the second stationary terminal 12b so that the equalized reproduced data signals associated with the second rotary head 10b are output from the reproducing equalizer circuit 16, the movable terminal 80c of the seventh switch 80 is connected to the second stationary terminal 80b. Thus, the second AGC circuit 24b is activated to generate the control signal in association with the reproduced data signal from the second rotary head 10b. As a result, both the levels of the reproduced data signals from the first and second rotary heads 10a and 10b are adjusted to the same prescribed level.

As described above, according to the present invention, it is possible to provide an extremely preferable data reproducing apparatus which is able automatically to compensate differences between reproducing characteristics of multiple heads without carrying out any manual adjustment.

While there has been illustrated and described what are at present considered to be preferred embodiment of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefore, it is intended that the present invention not be limited to the particular embodiment disclosed as the best mode contemplated for carrying out the present invention, but that the present invention include all embodiments falling within the scope of the appended claims.

The foregoing description and the drawings are regarded by the applicant as including a variety of individually inventive concepts, some of which may lie partially or wholly outside the scope of some or all of the following claims. The fact that the applicant has chosen at the time of filing of the present application to restrict the claimed scope of protection in accordance with the following claims is not to be taken as a disclaimer of alternative inventive concepts that are included in the contents of the application and could be defined by claims differing in scope from the following claims, which different claims may be adopted subsequently during prosecution, for example for the purposes of a divisional application.

**Claims**

1. An apparatus for reproducing data recorded on a recording medium comprising a plurality of head means (10a, 10b) each provided for generating an intermittently reproduced analogous data signal from the recording medium in a prescribed order from the data on the recording medium, means (12) for combining a plurality of the analogous data signals intermittently obtained by the plurality of head means (10a, 10b) into a single reproduced data signal and means (16) for processing the single reproduced data signal from the combining means (12) and outputting a processed analogous data signal, CHARACTERIZED IN THAT the apparatus further comprises means (24a, 24b) for detecting the level of the processed analogous data signal and generating a level detection signal corresponding to each of the intermittently reproduced analogous data signals and means (20a, 20b, 20) responsive to the level detection signals for automatically adjusting the gain of the intermittently reproduced analogous data signals.

2. The data reproducing apparatus of claim 1 wherein the gain adjusting means includes a plurality of variable gain amplifiers (20a, 20b), each coupled between one of the plurality of head means (10a, 10b) and the combining means (12).

3. The data reproducing apparatus of claim 1 wherein the gain adjusting means includes a variable gain amplifier (20) coupled between the combining means (12) and the processing means (16).

4. An apparatus for reproducing data which is digitally recorded on a magnetic tape comprising a pair of rotary head means (10a, 10b), each for alternately generating an intermittently reproduced analogous data signal corresponding to the digitally recorded data on the magnetic tape, a rotary head switch means (12) for combining the analogous data signals into a single reproduced data signal and a reproduced signal equalizer means (16) for equalizing the frequency response characteristics of the single reproduced data signal and outputting an equalized analogous data signal CHARACTERIZED IN THAT the apparatus further comprises means for detecting the level of the equalized analogous data signal corresponding to each of the intermittently reproduced analogous data signals, including a pair of level detectors (24a, 24b) alternately activated in synchronism with the rotary head means (10a, 10b) and variable gain amplifier means (20a, 20b) responsive to the level detection signals for automatically adjusting the gain of the intermittently reproduced analogous data signals.

Fig. 1

Fig. 2

Fig. 3

EP 0 309 287 A2

Fig. 4